# FASCICULE DE BREVET EUROPEEN

(11) **EP 0 833 336 B1**
(45) Date de publication et mention de la délivrance du brevet: **17.05.2006**
(21) Numéro de dépôt: 97402110.7
(22) Date de dépôt: 11.09.1997
(51) Int. Cl.: G11B 27/00, G07F 17/30, G11B 27/34, G11B 33/10

(54) **Procédé de sélection d'un enregistrement sur un système numérique de reproduction audiovisuel et système pour mise en oeuvre du procédé**
Verfahren zur Auswahl einer Aufzeichnung in einem digitalen audiovisuellen Wiedergabesystem und System angewendet in einem derartigen Verfahren
Method of selecting a record in a digital audiovisual reproducing system and system used in such method

(30) Priorité: 25.09.1996 FR 9611677
(43) Date de publication de la demande: 01.04.1998
(73) Titulaire: TOUCHTUNES MUSIC CORPORATION, Las Vegas, NV 89104 (US)
(72) Inventeur: Mastronardi, Tony, Pierrefonds, Quebec, Canada H8Y 3L2 (CA)
(74) Mandataire: Debay, Yves

(56) Documents cités:
- EP-A- 0 425 168
- EP-A- 0 649 121
- WO-A-86/01326
- WO-A-93/18465
- WO-A-94/15416
- WO-A-95/03609
- WO-A-96/12255
- WO-A-96/12256
- WO-A-96/12258
- GB-A- 2 259 398
- US-A- 5 237 157
- US-A- 5 481 509
- PATENT ABSTRACTS OF JAPAN vol. 95, no. 010 & JP 07 281682 A (NAGAO YUASA), 27 octobre 1995,

## Description

La présente invention concerne un procédé de sélection d'un enregistrement sur un système numérique de reproduction audiovisuel à écran tactile et le système pour mise en oeuvre du procédé.

De tels systèmes de reproduction audiovisuel sont généralement rencontrés dans des cafés ou dans des pubs. Ce type de système est en fait constitué d'une machine de reproduction sonore appelée ordinairement juke-box associée à un moniteur assurant la visualisation d'images vidéo ou de clips vidéo. Pour cela, le juke-box est équipé d'un lecteur de disques compacts vidéo et d'une discothèque de disques compacts vidéo, et comporte des boutons de présélection repérant les titres des morceaux de musique qu'il est proposé de choisir. Le paiement d'une redevance adéquate suivi d'une ou plusieurs présélections autorise le déclenchement du système avec le chargement automatique, dans le lecteur, du disque sur lequel figure le morceau choisi, la reproduction audiovisuelle désirée pouvant alors commencer.

Ces systèmes, bien que permettant une reproduction fidèle et de bonne qualité, présentent néanmoins de sérieux inconvénients. Ainsi, un premier inconvénient est relatif au volume nécessaire pour le stockage de la discothèque, ce qui implique en conséquence, que le système est de dimensions importantes et donc encombrant. Egalement, ces systèmes qui font appel à un matériel surtout mécanique utilisant des techniques sophistiquées présentent des taux de pannes significatifs, ce qui est un autre inconvénient. Enfin, il est très rare que tous les morceaux d'un disque soient régulièrement écoutés, certains même ne le sont quasiment jamais, mais ne peuvent cependant pas pour autant être éliminés. Un autre inconvénient est dû au fait que les sociétés gérant et distribuant ces systèmes mettent dans le circuit un nombre limité de disques identiques, et imposent une certaine rotation chez leurs clients, ce qui implique parfois pour ces derniers une attente désagréable lorsqu'un disque n'est pas disponible.

Par ailleurs, il est connu par la demande de brevet PCT/WO 93 184 65 des juke-boxes informatisés permettant de recevoir à travers un réseau de télécommunication et un modem connectant le juke-box au réseau, des informations numérisées constituant des chansons, ou morceaux musicaux téléchargés dans une mémoire de masse du juke-box. Le système de communication sert également au téléchargement de fichiers représentatifs d'informations graphiques numérisées, les chansons et les fichiers graphiques étant compressés avant leur envoi sur le réseau. Le processeur du juke-box exploite ensuite ces fichiers en les décompressant et en envoyant les données graphiques au circuit vidéo, et les données de la chanson au circuit audio.

Toutefois, le processeur gère également les interfaces-homme machine et la gestion de ces différents éléments se fait séquentiellement, en affichant les images graphiques représentatives de la chanson, ensuite en répondant à l'actionnement des touches par l'utilisateur puis en recherchant si l'utilisateur a payé les montants souhaités et enfin, lorsque le montant souhaité a été réglé, à déposer la sélection dans une file en vue de son exécution ultérieure. Par ailleurs, ce système ne peut fonctionner qu'en affichant d'abord les images graphiques et en lançant ensuite l'exécution de la chanson car le processeur ne peut, d'après les logigrammes, exécuter deux tâches en même temps.

L'actionnement des touches par un utilisateur nécessite un apprentissage, est source d'erreurs, et nécessite en plus un temps de sélection relativement long.

Il est également connu par le document GB 2 259 398 un juke-box avec visualisation de la couverture de la pochette du disque. Ce juke-box est équipé d'un écran tactile pour sélectionner des informations visualisées sur l'écran, d'un système de contrôle des informations visualisées sur l'écran, et de moyens de reproduction de la musique (lecteur de CD, de cassettes et/ou de disques vinyles). Les informations sont visualisées sur l'écran sous forme de fenêtres. Il est prévu de pouvoir ajouter ou retirer des disques.

Il est également connu par le document WO 96 12258 un système de reproduction audiovisuelle numérique intelligent. Ce système comprend un microprocesseur associé à un dispositif de paiement, des moyens de mémorisations de masse pour stocker, sous forme numérique, les informations visuelles et sonores à exploiter, des moyens de visualisation et de reproduction sonore, et un écran tactile. L'écran tactile est associé à un programme d'interface qui traduit les événements extérieurs pour déclencher la modification du déroulement d'un des modules du programme.

La présente invention a pour but de proposer un procédé de sélection d'un enregistrement qui soit convivial et facilement utilisable par un néophyte.

Ce but est atteint par un procédé de sélection d'un enregistrement sur un système de reproduction audiovisuel selon la revendication 1.

Un autre but de l'invention est de proposer un système de reproduction audiovisuel permettant la mise en oeuvre du procédé.

Ce but est atteint par un système de reproduction audiovisuel selon la revendication 9.

D'autres avantages et particularités de la présente invention apparaîtront à la lecture de la description suivante, faite en référence aux dessins annexés, donnés à titre d'exemple illustratif mais non limitatif d'une réalisation de l'invention, dans lesquels :

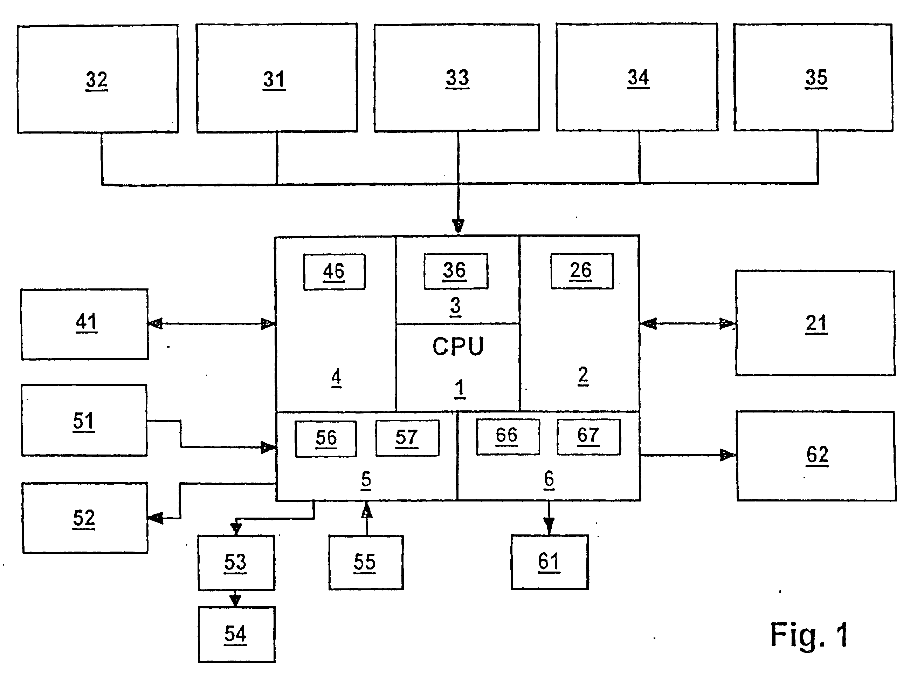

la figure 1 représente un schéma électrique du matériel constituant l'invention ;
la figure 2 représente un organigramme faisant apparaître les modules de services spécifiques d'une tâche et géré au moyen du système d'exploitation multitâches, l'ensemble des modules étant inclus dans une librairie stockée dans les moyens de mémorisation ;
la figure 3 représente l'organisation du système multitâches gérant l'ensemble des moyens matériels et logiciels ;
la figure 4 représente un logigramme de description du fonctionnement du système de gestion multitâches ;
la figure 5 représente le logigramme de vérification d'activité des tâches ;

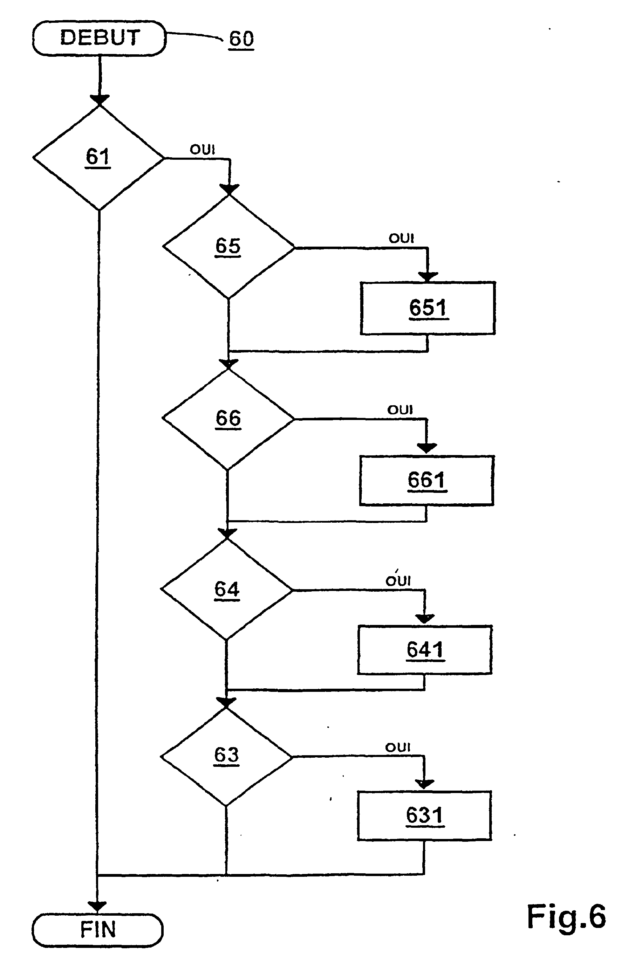

la figure 6 représente le logigramme de mise en file d'attente des sélections ;
la figure 7 représente le schéma d'organisation des bases de données ;
la figure 8 représente l'affichage graphique réalisé lorsque le système de reproduction audiovisuel joue un enregistrement sélectionné ;
la figure 9 représente un exemple d'affichage graphique correspondant à un premier mode de réalisation de menu de sélection ;
la figure 10 représente l'affichage graphique correspondant à un deuxième mode de validation de menu de sélection.

De préférence, mais cependant de manière non limitative, le système de reproduction audiovisuel utilise les éléments matériels énumérés et référencés ci-après.

L'unité centrale (1) à microprocesseur est un système compatible PC de haute performance, le choix, lors de la mise en oeuvre, s'est porté sur un système du type INTEL 80486 DX/2 qui possède des moyens de mémorisation et les caractéristiques suivantes :
- compatibilité avec le bus local Vesa,
- antémémoire du processeur : 256 Ko,
- mémoire vive : RAM de 32 Mo ou plus auto-alimentée,
- ports série et parallèle de haute performance,
- adaptateur graphique type SVGA à microprocesseur,
- contrôleur de bus SCSl/2,

Toute autre unité centrale possédant des performances équivalentes ou supérieures pourra être utilisée dans l'invention.

Cette unité centrale commande et gère un circuit de commande de son (5), un circuit de commande des télécommunications (4), un circuit de commande des entrées (3), un circuit de commande de la mémorisation de masse (2), un circuit de commande des moyens de visualisation (6). Les moyens de visualisation se composent principalement d'un moniteur vidéo (62) à écran plat sans entrelacement, par exemple de type SVGA à haute résolution et faible rayonnement. C'est ce moniteur qui est utilisé pour la reproduction d'images (par exemple les couvertures d'albums des sélections musicales), de graphiques ou de clips vidéo.

Des moyens de mémorisation de masse (21) utilisant des disques durs haute vitesse et haute capacité, sont associés aux moyens de mémorisation déjà présents dans le dispositif à microprocesseur. Ces moyens servent au stockage d'informations audiovisuelles numérisées et compressées.

Un modem de télécommunication (41) haute vitesse d'au moins 28,8 Kbps, ou tout autre matériel de télécommunication associé à d'autres média de télécommunication est intégré pour autoriser la liaison avec un réseau de distribution d'informations audiovisuelles contrôlé par un serveur central.

Pour la reproduction des informations sonores des sélections musicales, le système comporte des haut-parleurs (54) recevant le signal d'un amplificateur tuner (53) relié au circuit électronique (5) de type synthétiseur de musique, prévu pour supporter un grand nombre de sources d'entrée tout en fournissant une sortie présentant une qualité de type CD (disque compact), tel que par exemple l'adaptateur audio multimédia à microprocesseur, du type carte "Sound Blaster" SBP32AWE de chez Creative Labs Inc. sur lequel deux tampons mémoire (56, 57) sont ajoutés dans le but explicité ultérieurement.

De même le circuit de commande des moyens de visualisation comporte également deux mémoires tampon (66, 67) dans le but explicité ultérieurement.

Une alimentation thermiquement régulée de 240 Watts ventilée fournit l'énergie au système. Cette alimentation est protégée contre les surintensités et les suroscillations.

Le système de reproduction audiovisuel gère, par le biais de son circuit contrôleur d'entrée (3), un écran tactile (33) "Intelli Touch" de chez Elo Touch Systems Inc., qui inclut un panneau de revêtement de la vitre utilisant la "technologie avancée d'onde de surface" ainsi qu'un contrôleur de bus de type AT. Cet écran tactile permet, après avoir affiché sur le moniteur vidéo (62) ou l'écran d'un téléviseur (61) diverses informations de sélection utilisées par les clients, ainsi que des informations de commandes et de contrôle de gestion utilisées par le gérant ou le propriétaire du système. Il est également utilisé à des fins de maintenance en combinaison avec un clavier externe (34) qui peut être relié au système qui possède pour cela un connecteur de clavier, contrôlé par un verrou à clé (32) à travers le circuit d'interface (3).

Le circuit d'entrée (3) interface également avec le système un ensemble de télécommande (31) constitué, par exemple :
- d'une télécommande infrarouge de chez Mind Path Technologies Inc., émetteur qui possède 15 touches de commande pour le système à microprocesseur et 8 touches de commande pour dispositif de projection ;
- d'un récepteur infrarouge avec adaptateur série de chez Mind Path Technologies Inc.

Un dispositif de paiement de redevances (35) de chez National Rejectors Inc., est également relié au circuit d'interface d'entrée (3). Il est également possible d'utiliser tout autre dispositif qui permette la réception de tout mode de paiement par pièces, billets, jetons, cartes magnétiques, à puces ou combinaison des moyens de paiement.

Pour loger le système, il est de plus prévu un chassis ou bâti en acier avec garnitures extérieures personnalisables.

Outre ces éléments, un microphone (55) sans fil est relié au contrôleur de son (5), ce qui permet de transformer ce dernier en un puissant système d'annonces et d'informations destinées au public ou aussi en machine de karaoké. De même un système de commande à distance permet au gérant, par exemple de derrière le bar, d'accéder et de contrôler différentes commandes telles que :
- la commande marche/arrêt du microphone ;
- la commande de mise en sourdine des haut-parleurs ;
- la commande de contrôle de volume sonore ;
- la commande d'annulation de la sélection musicale en cours d'écoute.

Deux tampons (56, 57) sont associés au circuit contrôleur de son (5) pour permettre de mémoriser, chacun de façon alternative, une information correspondant à au moins un quart de seconde de son. De même deux tampons (66, 67) sont associés au circuit contrôleur de vidéo (6) capables, chacun et alternativement, de mémoriser au moins un dixième de seconde d'images. Enfin, un tampon respectif (46, 36, 26) est associé à chacun des circuits de contrôleur de communication (4), d'interface d'entrée (3) et de mémorisation (2).

Le logiciel d'exploitation du système a été élaboré autour d'une librairie d'outils et de services très largement orientée vers le domaine audiovisuel dans un univers multimédia. Cette librairie inclut de manière avantageuse un système d'exploitation multitâches performant qui autorise efficacement l'exécution simultanée de multiples fragments de code. Ce logiciel d'exploitation permet ainsi les exécutions concurrentes, de manière ordonnée et en évitant tout conflit, d'opérations réalisées sur les moyens de visualisation, les moyens de reproduction sonores de même que la gestion des liaisons de télécommunications au travers du réseau de distribution. De plus, ce logiciel présente une grande flexibilité.

Cette librairie comporte, comme on le verra ultérieurement, une interface de programmation pour l'écran tactile (153) associé à chaque module graphique qui sera décrit ultérieurement et comportant, en fonction du module graphique associé, des fonctions de réaction à une activation par un ou plusieurs événements extérieurs. Les événements extérieurs proviennent de l'utilisateur et sont traités par l'interface d'écran tactile pour pouvoir être interprétés par le système d'exploitation comme l'équivalent d'un événement souris. Ainsi le toucher d'une zone est reconnu par l'interface de l'écran tactile comme un événement appui (down), le déplacement du doigt sur l'écran comme un événement de traîne (drag), le retrait du doigt de l'écran comme le relâchement d'un bouton (up). Chaque événement interprété par l'interface écran tactile associé, est délivré ensuite au module concerné pour provoquer, soit une modification du déroulement du programme par l'appel, par exemple, d'un autre module graphique, soit une modification de paramètres physiques de la machine en provoquant une mémorisation de ces paramètres et une utilisation ultérieure par les éléments électroniques associés à ce paramètre.

Les données audiovisuelles numérisées et compressées sont stockées dans les moyens de mémorisation (21).

Chaque sélection est disponible selon deux formats numérisés : avec une qualité hi-fi ou une qualité CD.

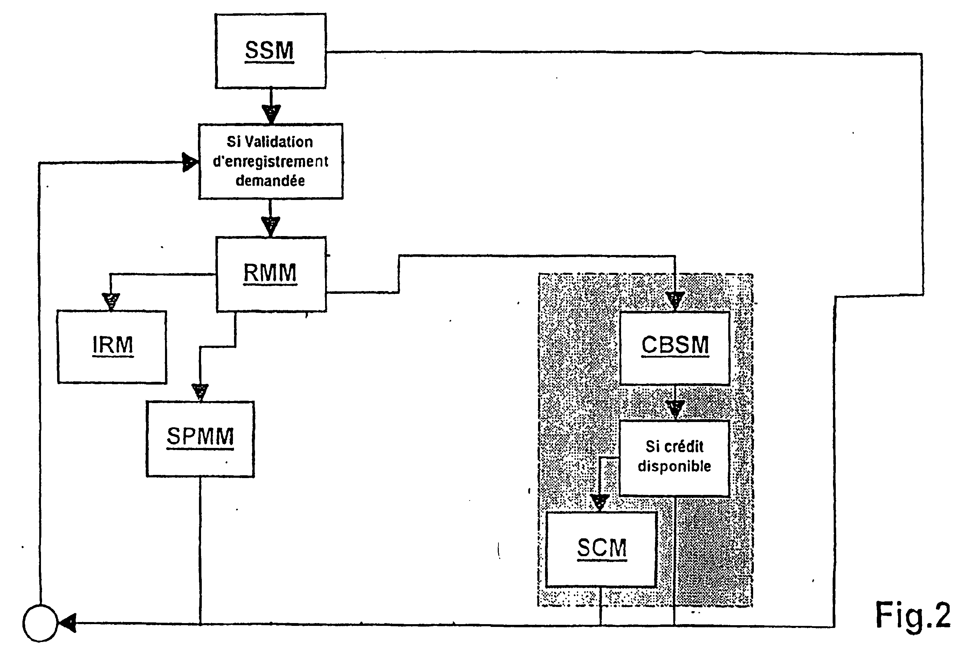

Préalablement à la description et à lecture de cet organigramme de la figure 2, il est essentiel de noter que, bien que tous ces modules décrits séparément semblent être utilisés d'une manière séquentielle, les tâches spécifiques de ces modules sont en réalité exécutées simultanément dans un environnement utilisant le système d'exploitation multitâches. Par conséquent, l'organigramme indique des opérations spécifiques qu'un module doit effectuer et non un branchement vers ce module qui invaliderait toutes les opérations effectuées par les autresmodules.

Le premier module, référencé SSM, est le module de démarrage du système. Ce module ne fournit qu'un seul service, par conséquent il se charge automatiquement au moment de la mise sous tension du système. Si le système est démarré avec un numéro d'enregistrement correct, il rentre alors directement dans le mode "en service" du module référencé RMM.

Le module RMM est le module de mode "en service", qui est le mode de fonctionnement dans lequel le système entre dès que son numéro d'enregistrement est validé. Dans ce mode, le système est prêt pour manipuler toute requête qui peut être déclenchée par différents événements prédéfinis, comme par exemple :
- des clients qui touchent l'écran : lorsqu'un client ou un utilisateur touche l'écran, le système transfère le contrôle de sa session de premier plan au module CBSM du mode de sélection et d'exploitation client ;
- la réception d'un signal de télécommande : quand une commande est reçue, elle est traitée dans une session d'arrière-plan par le module SMM de commandes système alors que la session de premier plan reste disponible pour d'autres interventions ;
- l'apparition d'une fin de temporisation montrant l'inactivité du système : lorsqu'un des différents temporisateurs est activé, le contrôle est temporairement donné au module IRM de routine d'inactivité pour traitement.

Le système reste dans le mode "en service" jusqu'à ce que l'un des événements décrits ci-avant se produise.

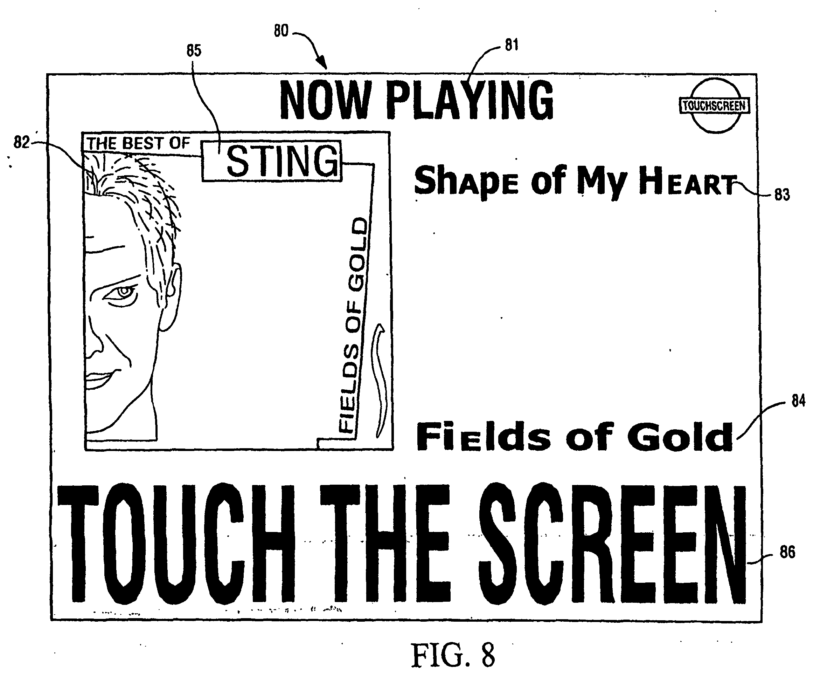

Ainsi, le module RMM du mode "en service" comporte un module permettant un affichage graphique correspondant par exemple à celui de la figure 8. Ce module graphique permet l'affichage d'une fenêtre (80) comportant, par exemple, l'affichage dans une zone (81) de la mention "en cours" d'exécution.

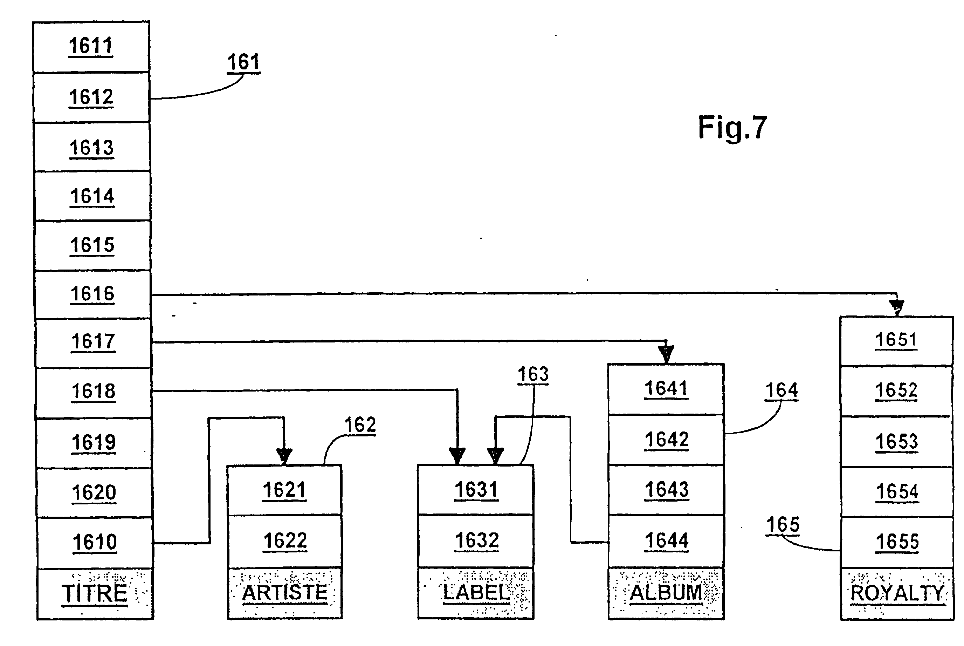

Une deuxième fenêtre (82) de dimension inférieure et incluse dans la première fenêtre (80) permet la représentation graphique de la pochette du disque en cours d'exécution. Dans un pavé alphanumérique (83) figure le titre en cours d'exécution de l'album et dans un deuxième pavé alphanumérique (84) le nom de l'album. Dans un troisième pavé alphanumérique (85) est mentionné le nom de l'artiste ou du groupe. Ces informations proviennent de la base de données (16) à partir du numéro d'identification du titre et des informations mémorisées dans la base de données selon les processus d'accès correspondant à la figure 7 explicités ultérieurement. Enfin, cette fenêtre (80) comporte une zone (86) dans laquelle figure la mention "appuyez" ou "touchez-moi" incitant l'utilisateur à poser son doigt sur l'écran pour que le module RMM détectant, par l'intermédiaire du module d'interface de l'écran tactile, la position du doigt sur n'importe quelle zone de l'écran, transfère le contrôle de sa session au module CBSM de mode de sélection et d'exploration des sélections par le client.

Dans le cas où le juke-box n'est plus en cours d'exécution de chanson et lorsque les chansons de la file sont épuisées, l'écran pourra servir à afficher des événements promotionnels ou à afficher les sélections d'échantillonnage entrées en mémoire par le gérant du juke-box. Ces échantillons de sélection ont pour but d'inciter les clients à écouter la chanson entière, ils peuvent être effectués de façon aléatoire ou présélectionné par le gérant de l'établissement, cette présélection étant mémorisée et servant de critère de recherche dans la base de données du juke-box.

Le module IRM est le mode de routines d'inactivité. Ce module contient des routines réalisant des fonctions prédéterminées telles que l'affichage de la couverture d'un album, l'émission de parties de morceaux musicaux présents dans le système, la reproduction de sélections complètes à des fins promotionnelles internes, des reproductions audio à des fins promotionnelles externes, des annonces promotionnelles parlées de nouvelles sélections musicales, le retour vers une source auxiliaire, auxquelles il peut être fait appel lorsque le système est en inactivité et qu'une période de temps prédéfinie, mais réglable, correspondant à une temporisation, s'est écoulée.

Le module d'interface de programmation (153) pour l'écran tactile (33) comporte différents modules. Chacun des sous-modules correspond à un des modules graphiques évoqués ci-dessus.

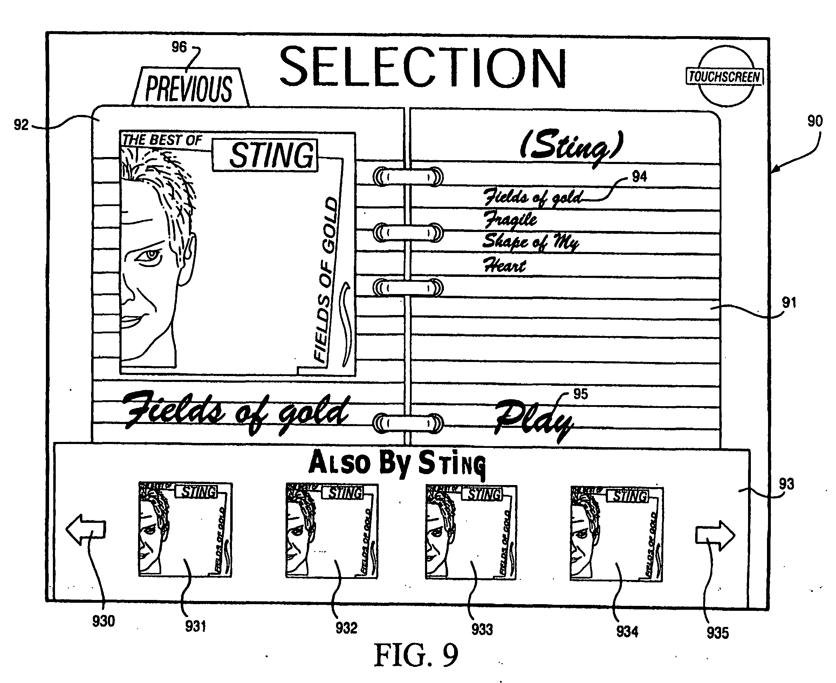

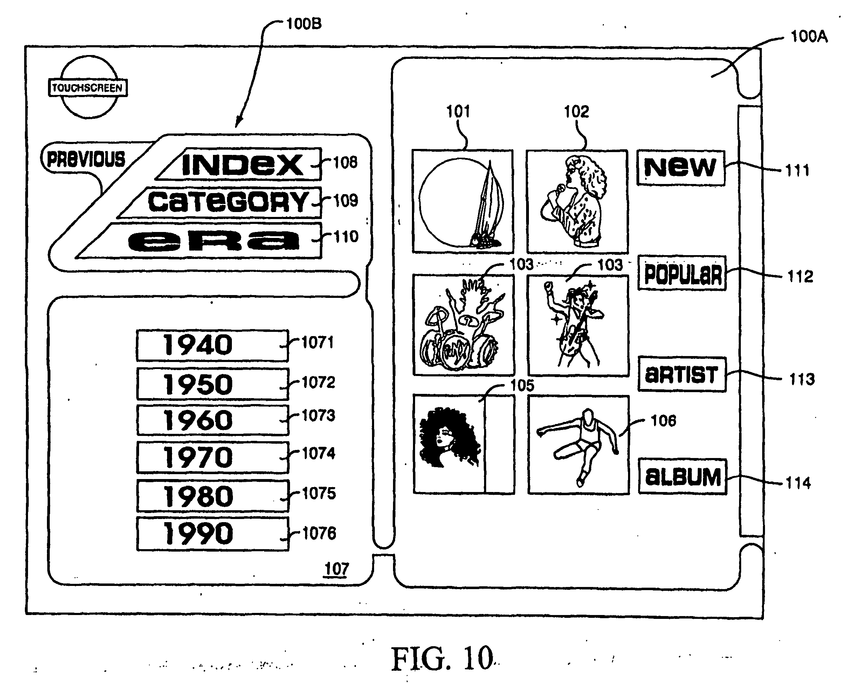

Le module CBSM est le module de mode de sélection et d'exploration client. L'accès à ce module est déclenché à partir du mode "en service" de la figure 8, lorsque le client touche l'écran. L'affichage permet à l'usager de visualiser un menu de sélection prévu aux figures 9 ou 10 pour une exploration puissante, et l'aider dans son choix de sélections musicales.

La figure 9 représente une première variante du menu de sélection dans laquelle l'écran du moniteur permet l'affichage d'une fenêtre (90) à l'intérieur de laquelle figure un agenda pourvu par exemple, d'un index (96). Sur une des pages de l'agenda figure une fenêtre de visualisation de la pochette d'un album (92), sur l'autre page figurent, d'une part la liste (94) des titres figurant dans l'album, et d'autre part, un pavé alphanumérique (95) permettant de déclencher l'exécution de l'enregistrement sélectionné préalablement en ayant touché l'un des titres de la liste (94), ce qui le met en évidence, par exemple par une surbrillance. En bas de l'écran, figure un bandeau (93) dans lequel une pluralité de petites fenêtres (931 à 934) qui permettent chacune la visualisation d'une pochette d'album différente appartenant au même groupe musical ou au même chanteur. Des flèches directionnelles (930, 935) permettent, par effleurement de ces flèches, de faire défiler dans les petites fenêtres les différentes pochettes non visualisées, soit vers le haut (930), soit vers le bas (935), et disponibles pour le même groupe ou chanteur.

Dans un autre mode de réalisation de l'interface représenté à la figure 10, celle-ci est partagée en deux sous-fenêtres, une première (100A) qui comporte une pluralité de petites zones de sous-fenêtres (101 à 106) dans lesquelles une image différente de chaque pochette contenant un album est représentée dans chaque sous-fenêtre (101 à 106). Des flèches de défilement non représentées et identiques à celles (930, 935) de la figure 9 permettent une scrutation des autres pochettes disponibles. Dans une zone supplémentaire de cette fenêtre (100A) figurent des critères de sélection, par exemple par nouveautés (111), par artistes populaires (112), par noms d'artistes (113), par albums (114). L'autre moitié (100B) de la fenêtre principale est divisée en deux parties, une première partie comportant trois critères de sélection : un premier par catégorie (109), un deuxième par index (108), et un troisième par aire (110). Dans la deuxième partie de la seconde moitié (100B), figure la possibilité pour l'utilisateur de sélectionner une des périodes décennales affichées, par exemple, dans des pavés alphanumériques (1071 à 1076) affichant chacun une décennie pour couvrir par décennie, par exemple, le demi-siècle passé de 1940 à 1990. Ainsi, comme on peut le comprendre, le logiciel d'interface d'écran tactile associe à chacune des zones de l'écran tactile correspondant à une zone d'affichage, un critère de sélection utilisé comme critère de recherche dans la base de données pour accéder aux informations graphiques ou alphanumériques, ou audio, disponibles dans celle-ci. A ce critère est associé, selon les besoins, un incrément de la taille du nombre de fenêtres visualisantes en une seule fois sur l'écran pour sélectionner, par exemple, le nombre d'informations graphiques correspondant au nombre maximum de pochettes visualisantes sur l'écran.

Là encore, un module d'interface de programmation (153) pour l'écran tactile (33) est associé de façon à ce que l'effleurement des différentes zones correspondantes aux zones d'action ou aux flèches de déroulements soit interprété correctement par ce module d'interface (153). De même, chaque module graphique comportera un module qui permettra ultérieurement l'exploitation correspondante de la base de données (16) qui sera décrite en liaison avec la figure 7. Cette exploitation de base de données permet, lors de l'effleurement du bouton "populaire", par exemple, d'afficher successivement dans chacun des pavés d'affichage (101 à 106, ou 931 à 934) les images d'un album et différents noms d'artiste de musique populaire disponibles.

Le système d'exploitation multitâches constitue un des éléments essentiels pour permettre l'exécution simultanée de multiples fragments de codes et pour gérer les priorités entre les différentes tâches qui se réveillent.

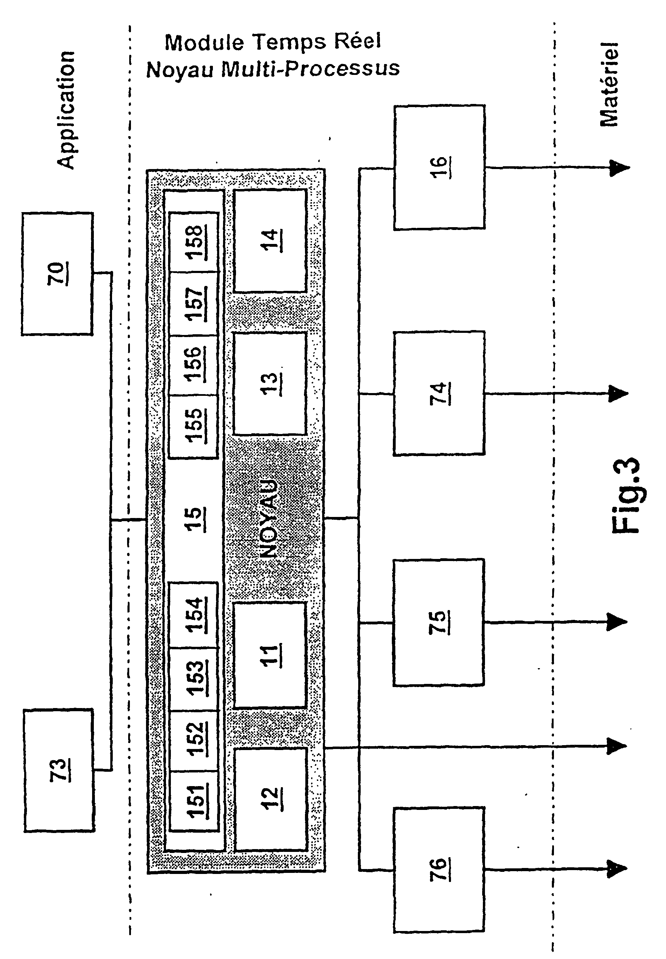

Ce système d'exploitation multitâches est organisé, comme représenté à la figure 3, autour d'un noyau comportant un module (11) de résolution des priorités entre tâches, d'un module (12) superviseur des tâches, d'un module (13) de stérilisation et un module (14) du processus de communication. Chacun des modules communique avec des interfaces (15) de programmation des applications et le base de données (16). Il y a autant d'interface de programmation qu'il y a d'applications. Ainsi le module (15) comporte une première interface (151) de programmation pour le commutateur à clé (32), une deuxième interface (152) de programmation pour la commande à distance (31), une troisième interface (153) de programmation pour l'écran tactile (33), une quatrième interface (154) de programmation pour le clavier (34), une cinquième interface (155) de programmation pour le dispositif de paiement (35), une sixième interface (156) de programmation pour le circuit de contrôle du son (5), une septième interface (157) de programmation pour le circuit (6) de contrôle de la vidéo et une dernière interface (158) pour le circuit (4) de contrôle des télécommunications.

Cinq tâches ayant un ordre de priorités décroissant sont gérées par le noyau (cerne) du système d'exploitation, la première (76) pour les entrées/sorties vidéo à la priorité la plus élevée, la deuxième (75) de niveau deux concerne le son, la troisième (74) de niveau trois les télécommunications, la quatrième (73) de niveau quatre les interfaces et la cinquième (70) de niveau cinq la gestion. Ces ordres de priorités seront pris en compte par le module (11) de résolution des priorités au fur et à mesure de l'apparition ou de la disparition d'une tâche. Ainsi, dès qu'une tâche vidéo apparaît, les autres tâches en cours d'exécution sont suspendues, la priorité est donnée à cette tâche et toutes les ressources du système sont allouées à la tâche vidéo. La tâche vidéo (76) en sortie a pour objet de décharger les fichiers vidéo de la mémoire de masse (21) alternativement vers l'un des deux tampons (66, 67), tandis que l'autre tampon (67, respectivement 66) est utilisé par le circuit (6) contrôleur de vidéo pour produire l'affichage après décompression des données. En entrée, la tâche vidéo (76) a pour objet de transférer les données reçues dans le tampon de télécommunication (46) vers la mémoire de masse (21) et l'un des deux tampons (26) de la mémoire de masse (21). Il en est de même pour la tâche son (75), d'une part en entrée entre le tampon de télécommunication (46) et le tampon (26) de la mémoire de masse (21), et, d'autre part, en sortie entre le tampon (26) de la mémoire de masse (21) et l'un des deux tampons (56, 57) du circuit (5) contrôleur de son.

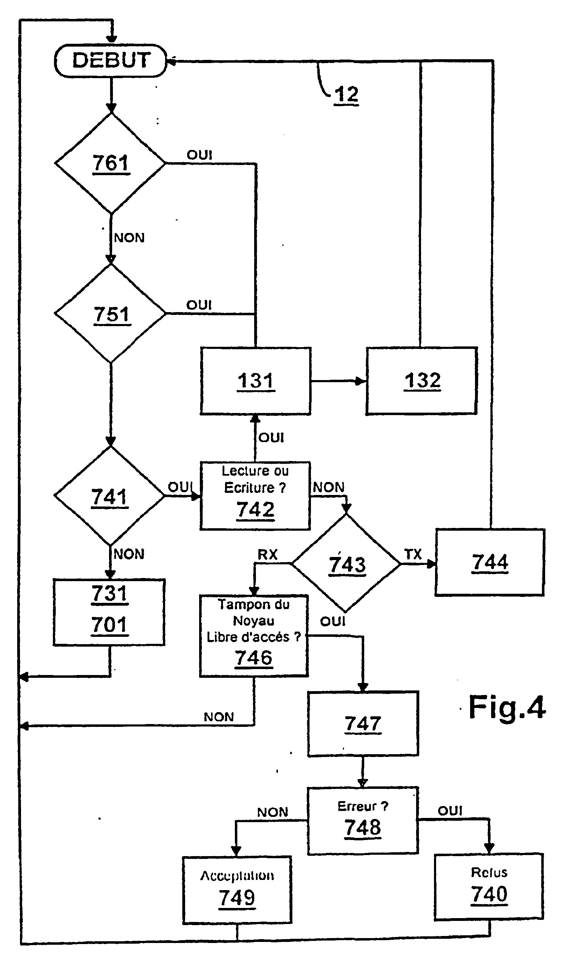

Le module superviseur de tâche (12) va maintenant être décrit en liaison avec le figure 4. Ce module effectue dans l'ordre de priorité un premier test (761) pour déterminer si la tâche vidéo est active, c'est-à-dire si un des tampons vidéo (66, 67) est vide. Dans le cas où la réponse est négative, le module superviseur de tâche passe au test suivant qui est un second test (751) pour déterminer si la tâche son est active, c'est-à-dire si un des tampons (56, 57) est vide. En cas de réponse négative un troisième test (741) détermine si la tâche communication est active, c'est-à-dire si le tampon (46) est vide. Après une réponse affirmative à l'un des tests, le module superviseur de tâche (12) remplit, à l'étape (131), la file de requête (13) d'accès mémoire et exécute à l'étape (132) cette requête en lecture ou en écriture entre la mémoire de masse (21) et le tampon correspondant à la tâche active, puis rebouche sur le premier test. Lorsque le test (741) sur l'activité d'une communication est affirmatif, le superviseur (12) effectue un test (742) pour déterminer s'il s'agit de lire ou d'écrire de l'information en mémoire. Si oui, la requête d'écriture ou de lecture est mise dans la file à l'étape (131). Dans le cas contraire, le superviseur détermine, à l'étape (743), s'il s'agit d'une transmission ou d'une réception et, dans le cas d'une transmission, envoie, à l'étape (744), le bloc d'informations au serveur central. Dans le cas d'une réception, le superviseur vérifie, à l'étape (746), que les tampons du noyau sont libres d'accès et, dans l'affirmative, envoie un message au serveur central pour accepter la réception d'un bloc de données à l'étape (747), dans la négative, on rebouche sur les tests de départ. Après la réception d'un bloc, un contrôle d'erreurs (748) du type de redondance cyclique SRC (Cyclique Redondant Check) est effectué. Le bloc est refusé à l'étape (740) en cas d'erreur, ou accepté dans le cas contraire, par l'envoi d'un message correspondant au serveur central signifiant que le bloc portant un numéro déterminé est refusé ou accepté, puis rebouche sur les tests de départ. Dans le cas où aucune tâche de niveau supérieur n'est active, le superviseur effectue, à l'étape (731 ou 701), le traitement des tâches d'interface ou de gestion, puis rebouche sur les tests de départ.

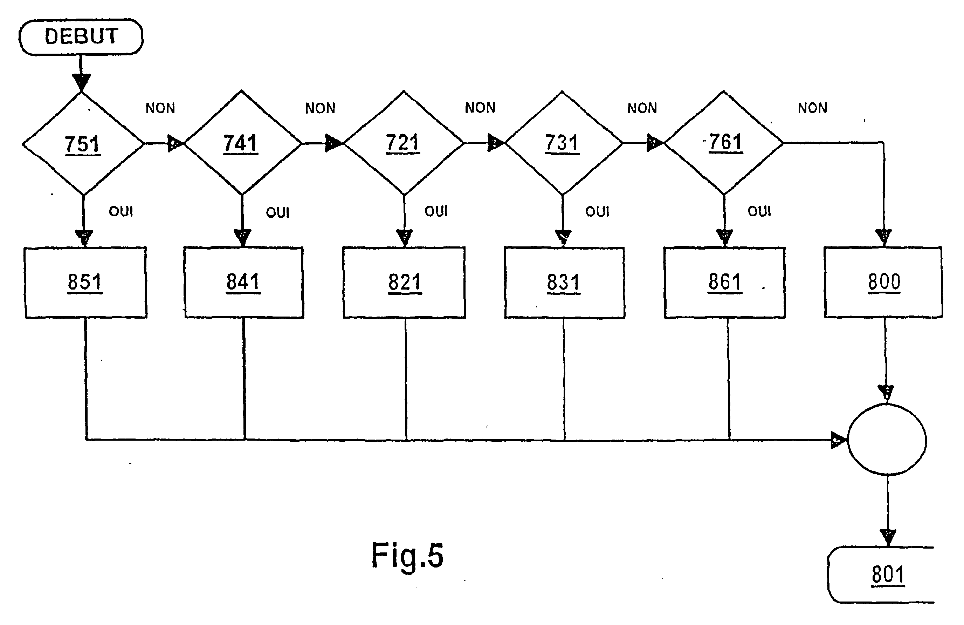

La détection d'une tâche active ou prête se fait, comme représenté à la figure 5 par un test respectivement (721 à 761) sur chacun des tampons matériels ou logiciels respectifs (26) du disque dur, (36) d'interface, (46) de télécommunication, (56 et 57) de son, (66 et 67) de la vidéo qui sont associés avec chacun des circuits contrôleurs respectifs (2, 3, 4, 5, 6) de chacun des dispositifs matériels associés à l'unité centrale (1). Le test (721) permet de voir si des données sont présentes dans le tampon de mémoire d'entrée/sortie du disque, le test (731) permet de voir si des données sont présentes dans les tampons mémoires hardware ou software du dispositif d'interface client, le test (741) permet de voir si des données sont présentes dans les tampons en mémoire software ou hardware du dispositif télécommunication, le test (751) permet de déterminer si des données sont présentes dans le tampon en mémoire hardware ou software pour le son, le test (761) permet de voir si des données sont présentes dans les tampons mémoires hardware ou software du dispositif vidéo. Si un ou plusieurs de ces tampons sont remplis de données, le superviseur (12) positionne le ou les tampons de statut respectifs (821) pour le disque dur, (831) pour l'interface, (841) pour les télécommunications, (851) pour le son, (861) pour la vidéo correspondant au matériel à un état logique illustratif de l'activité.

Dans le cas contraire, les tampons de statut du superviseur sont remis à l'étape (800) à une valeur illustratrice de l'inactivité.

Le statut d'opération du système est maintenu sur disque dur.

A chaque fois qu'un événement notable est enclenché, le système l'enregistre immédiatement sur le disque.

Ainsi, dans l'éventualité où surviendrait une panne électrique ou encore un bris d'équipement, le système sera en mesure de redémarrer exactement à l'endroit où il a été interrompu.

Les événements qui engendrent la sauvegarde du statut d'opération sont :
- entrée d'argent (l'ajout de crédits) ;
- l'ajout d'une sélection dans la file d'attente ;
- la fin d'une sélection (changement de la sélection présentement en écoute).

Le fichier est dans un format machine seulement lisible par l'unité et ne prend pas plus de 64 octets.

Du fait, d'une part du mode de gestion des tâches, en affectant la priorité la plus élevée à la tâche vidéo, d'autre part de la présence des tampons matériel ou logiciel affectés à chacune des tâches pour mémoriser temporairement des données et de la présence des tampons de statut relatif à chaque tâche, il a été possible de faire gérer toutes ces tâches par une seule unité centrale avec un système d'exploitation multitâches qui offre les possibilités d'un affichage vidéo c'est-à-dire d'images animées par opposition à une représentation graphique dans laquelle les informations à traiter sont moins complexes. Cette utilisation de présentation vidéo peut également se faire sans pénaliser le traitement du son par le fait que le circuit (5) de contrôleur de sons comporte des tampons de taille suffisante pour mémoriser une quantité de données compressées suffisante afin de permettre, pendant le traitement du son, le transfert de données vidéo vers un des tampons (66, 67) de la vidéo en attendant le transfert suivant de données de son.

De plus le système d'exploitation multitâches incluant une librairie contenant un ensemble d'outils et de services, permet de faciliter très significativement l'exploitation, du fait de son intégration dans les moyens de mémorisation et de la grande flexibilité ainsi apportée. En particulier grâce à cela, il est possible de créer un univers multimédia en gérant, de manière simple et efficace, simultanément la reproduction de sons, l'affichage d'images ou de graphiques, l'animation vidéo et l'interface avec l'utilisateur. La base de données (16) est constituée, comme représenté, à la figure 7 de plusieurs bases.

Une première (161) portant sur les titres des morceaux audiovisuels, une deuxième (162) sur les artistes, une troisième (163) sur les étiquettes (LABEL), une quatrième (164) sur les albums, une cinquième (165) sur les royalties. La première base (161) comporte une première information (1611) donnant le titre du morceau, une deuxième information (1612) donnant l'identification du produit, cette identification étant unique. Une troisième information (1613) permet de connaître la catégorie, à savoir, jazz, classique, variétés, etc. Une quatrième information (1614) permet de connaître la date de la mise à jour. Une cinquième information (1615) permet de connaître en seconde la longueur nécessaire pour exécuter le morceau.

La sixième information (1616) est un lien avec la base des royalties.

La septième information (1617) est un lien de l'album. La huitième information (1618) est un lien avec une des étiquettes "LABEL".

La neuvième information (1619) donne le coût d'acquisition pour le gérant du juke-box.

La dixième information (1620) donne le coût des royalties pour chaque exécution du morceau.

La onzième information (1610) est un lien avec la base des artistes. Ce lien est constitué par l'identité de l'artiste. La base de données de l'artiste comporte, outre l'identité de l'artiste, constituée par l'information (1621), une deuxième information (1622) constituée par le nom de l'artiste ou le nom du groupe.

La base des informations d'album comporte une première information qui est l'identité de l'album (1641) qui constitue le lien avec la septième information (1617) de la base de titre. Une deuxième information (1642) constitue le titre, une troisième information (1643) est constituée par la date de mise à jour de l'album, et une quatrième information (1644) est constituée par une identité d'étiquette (LABEL).

Lorsqu'une sélection audio ou audiovisuelle est en cours d'exécution, l'effleurement de l'écran provoque la recherche par le nom d'artiste des différents albums et l'affichage d'un nombre de différents albums du même chanteur, ou groupe, disponible dans la base, et correspondant au nombre de fenêtres ou pavés d'affichage. Si le nombre d'albums est supérieur au nombre n de fenêtres, le logiciel n'en affiche que les n albums suivants correspondant à l'album exécuté et l'utilisateur peut les visualiser en touchant les flèches de balayage. Lorsque le juke-box n'exécute pas de morceau de musique, ou une sélection audiovisuelle, le programme déclenche, par exemple, par balayage aléatoire de la base de données, l'affichage à intervalles réguliers de lots d'images de pochettes différentes disponibles dans la base de données par sélection aléatoire ou par d'autres critères de sélection déterminés par programme. L'effleurement d'une zone d'écran associée à un critère de sélection déclenche un programme de recherche dans la base de données des données correspondant aux critères, pour ensuite permettre l'envoi de ces données au logiciel de gestion de l'affichage pour assurer l'affichage, dans chacune des fenêtres, des images correspondant aux données sélectionnées sur la base du critère activé.

Ainsi, lorsqu'il est question de tampons, il est rappelé que ceux-ci peuvent être présents, soit physiquement sur le circuit auquel ils sont affectés, soit réalisés par logiciel en réservant des emplacements de mémorisation dans la mémoire du système.

## Revendications

1. Procédé de sélection d'un enregistrement sur un système de reproduction audiovisuel comprenant un microprocesseur, une mémoire de masse (21) stockant une base de données (16) d'enregistrements sonores numérisés de différents artistes et des informations graphiques correspondant à des pochettes d'album associées à chacun des enregistrements sonores numérisés, un dispositif audio, un moyen d'affichage, un système de communication et un système d'exploitation multitâche permettant un traitement simultané des opérations du microprocesseur, du dispositif audio et du système de communication, le procédé étant **caractérisé en ce qu'**il consiste :
- à afficher par l'intermédiaire du moyen d'affichage qui est un écran tactile (33) au moins deux zones de fenêtre (92, 93), dont l'une au moins comporte une pluralité de fenêtres (931, 932, 933, 934),
- à envoyer vers chacune des fenêtres (931, 932, 933, 934) de ladite au moins une zone de fenêtre (93), par sélection de données nécessaires à l'affichage, des informations graphiques, mémorisées sous forme numérique dans la mémoire de masse (21), représentatives d'une image d'une pochette d'album associée à chaque fenêtre (931, 932, 933, 934), les enregistrements sonores correspondant à chaque image d'une pochette étant mémorisés sous forme numérique dans la mémoire de masse (21) du système,
- à utiliser un logiciel d'interface (153) de l'écran tactile (33) pour associer au moins une adresse d'accès aux informations de la base de données (16) stockée dans la mémoire de masse (21) pour chaque fenêtre (931, 932, 933, 934) affichant une image d'une pochette d'album, lors de l'effleurement de l'une d'entre elles par un utilisateur,
- par une sélection tactile de l'utilisateur sur la zone locale de l'écran (33) correspondant à l'une des fenêtres (931, 932, 933, 934) affichant l'image d'une pochette d'album, à déclencher une sélection effective des informations relatives à l'album représenté par sa pochette et afficher, dans une zone distincte de la zone (93) servant à afficher les images de pochettes d'album, une liste des enregistrements sonores de l'album sélectionné disponibles dans la base de données (16).

2. Procédé selon la revendication 1, **caractérisé en ce que** l'effleurement de l'une des fenêtres provoque l'affichage, à la fois de la pochette (92) correspondante et des différents titres sélectionnables associés à cette représentation de pochette, la sélection d'un titre s'effectuant par effleurement de l'un des titres de la liste (94), l'exécution s'effectuant par l'effleurement d'un pavé (95) commandant l'exécution d'un titre sélectionné.

3. Procédé selon la revendication 1 ou 2, **caractérisé en ce qu'**une zone de l'écran, sous la forme d'un bandeau (93), comporte plusieurs pavés d'affichage graphique (931 à 934) dans lesquels sont affichées les images des pochettes du même chanteur, disponibles sur le système de reproduction audiovisuel.

4. Procédé selon la revendication 3, **caractérisé en ce que** dans le bandeau ou la zone de l'écran, l'affichage de flèche (930, 935) est effectué pour permettre, par une étape d'effleurement de l'une des flèches, de faire défiler, dans un sens ou dans l'autre, les autres images des pochettes non visualisées sur les fenêtres ou les pavés d'affichage avant effleurement d'une flèche.

5. Procédé selon une des revendications 1 à 4, **caractérisé en ce qu'**à la zone de fenêtre permettant l'affichage dans chaque fenêtre (101 à 106) d'une image de pochette, est associée une zone de fenêtre comportant des représentations de critères de sélection (108 à 114, 1071 à 1076), dont les adresses respectives permettent d'extraire de la base de données (16) les informations répondant à ces critères lorsque, par effleurement de l'écran (33) par l'utilisateur, un critère a été sélectionné.

6. Procédé selon la revendication 5, **caractérisé en ce que** le critère de sélection est constitué des différentes dernières décennies (1071 à 1076).

7. Procédé selon la revendication 5, **caractérisé en ce que** le critère de sélection est constitué par la catégorie (109).

8. Procédé selon la revendication 5, **caractérisé en ce que** le critère de sélection est constitué par un index (108).

9. Système de reproduction audiovisuel, comprenant :
- un microprocesseur (1) associé à un dispositif de paiement (35),
- un moyen de mémorisation de masse (21) pour, entre autres, stocker sous forme numérique compressée des enregistrements sonores à exploiter et des enregistrements visuels associés,
- des interfaces (153) connectées à des moyens numériques (33, 61, 62) de visualisation et des moyens numériques de reproduction sonore (54),
- un moniteur vidéo (62) connecté à un écran tactile (33), lui-même commandé par un programme d'interface (153) lui permettant de réagir au contact d'un utilisateur sur l'écran tactile (33), ce programme d'interface permettant de traduire ces contacts pour le système d'exploitation comme des événements souris déclenchant, par l'intermédiaire d'une librairie d'outils et de services intégrés, la modification du déroulement de l'un des modules du programme d'interface (153),
le système de reproduction audiovisuel étant **caractérisé en ce que** le moniteur vidéo (62) comprend un module de fonctionnement permettant d'afficher au moins deux zones de fenêtre (92, 93) dans l'écran tactile (33), l'une (93) au moins des zones de fenêtre comportant une pluralité de fenêtres (931, 932, 933, 934) représentant des images de pochettes d'album, chaque fenêtre (931, 932, 933, 934) comportant une image de pochette d'album étant associée à au moins une adresse d'accès aux informations de la base de données (16) stockée dans la mémoire de masse (21), ledit programme d'interface (153) étant agencé pour déclencher, par une sélection tactile de l'utilisateur sur la zone locale de l'écran (33) correspondant à l'une des fenêtres (931, 932, 933, 934) affichant l'image d'une pochette d'album, une sélection effective des informations relatives à l'album représenté par sa pochette et afficher par l'intermédiaire du module de fonctionnement du moniteur vidéo (62), dans une zone (92) distincte de la zone (93) servant à afficher les images de pochettes d'album, une liste des enregistrements sonores de l'album sélectionné disponibles dans la base de données (16).

10. Système de reproduction audiovisuel, selon la revendication 9, **caractérisé en ce que** l'une au moins des zones de fenêtre comporte une pluralité de fenêtres représentant des images de pochettes et **en ce que** l'autre zone de fenêtre comporte l'affichage d'une pluralité de critères de recherche dans la base de données des enregistrements visuels ou sonores répondant à l'information affichée sur l'écran.

11. Système de reproduction audiovisuel, selon la revendication 10, **caractérisé en ce que** le critère de recherches est la sélection d'un nombre d'albums correspondant au nombre de fenêtres visualisables sur l'écran et des informations graphiques associées.

12. Système de reproduction audiovisuel, selon la revendication 11, **caractérisé en ce que** le balayage de la base de données (16) s'effectue par incrément de la taille du nombre de fenêtres visualisables sur l'écran de sélection.

13. Système de reproduction audiovisuel, selon la revendication 12, **caractérisé en ce que** le critère de sélection correspond à la catégorie (109).

14. Système de reproduction audiovisuel, selon la revendication 13, **caractérisé en ce que** le critère de sélection est une période de temps déterminée (1071 à 1076).

15. Système de reproduction audiovisuel, selon la revendication 9, le système de reproduction audiovisuel étant **caractérisé en ce que** le module de fonctionnement du moniteur vidéo (62) permet d'afficher au moins deux zones de fenêtre dans l'écran tactile (33), l'une au moins des zones de fenêtre comportant une pluralité de fenêtres représentant des images de pochette associées à des titres stockés dans la mémoire de masse (21), l'effleurement d'une de ces fenêtres provoquant l'affichage de la pochette sélectionnée, de la liste des titres associés, et d'autres pochettes du même interprète que celui de la pochette sélectionnée, et l'autre zone de fenêtre comportant au moins une fenêtre dont l'effleurement permet de faire défiler les images des pochettes.

## Claims

1. Method for selecting a recording on an audio-visual reproduction system comprising a microprocessor, a mass memory (21) storing a data base (16) of digitised sound recordings by various artists and graphical information corresponding to album sleeves associated with each of the digitised sound recordings, an audio device, a display means, a communication system and a multi-tasking operating system allowing simultaneous processing of the operations of the microprocessor, audio device and communication system, the method being **characterised in that** it consists in:
- displaying by the display means, which is a touch screen (33), at least two window zones (92, 93), at least one of which comprises a plurality of windows (931, 932, 933, 934),
- sending to each of the windows (931, 932, 933, 934) of said at least one window zone (93), by selecting necessary data for display, graphical information, stored in digital form in the mass memory (21), representative of an image of an album sleeve associated with each window (931, 932, 933, 934), the sound recordings corresponding to each image of a sleeve being stored in digital form in the mass memory (21) of the system,
- using interface software (153) for the touch screen (33) in order to associate at least one access address with the information in the data base (16) stored in the mass memory (21) for each window (931, 932, 933, 934) displaying an image of an album sleeve, when one of them is touched by a user,
- by touch selection by the user on the local zone of the screen (33) corresponding to one of the windows (931, 932, 933, 934) displaying the image of an album sleeve, triggering an actual selection of the information relating to the album represented by its sleeve and displaying, in a zone distinct from the zone (93) used for displaying the images of album sleeves, a list of the sound recordings on the selected album that are available in the data base (16).

2. Method according to Claim 1, **characterised in that** touching one of the windows causes the display of both the corresponding sleeve (92) and various selectable titles associated with this representation of a sleeve, a title being selected by touching one of the titles in the list (94), the operation being executed by touching a box (95) controlling the execution of a selected title.

3. Method according to Claim 1 or 2, **characterised in that** a zone of the screen, in the form of a strip (93), comprises several graphic display boxes (931 to 934) in which are displayed the images of sleeves by the same singer that are available on the audio-visual reproduction system.

4. Method according to Claim 3, **characterised in that**, in the strip or the zone of the screen, arrows (930, 935) are displayed so as to make it possible, by a step of touching one of the arrows, to scroll in one direction or the other through the other images of sleeves not displayed in the display boxes or windows before an arrow is touched.

5. Method according to one of Claims 1 to 4, **characterised in that** the window zone allowing a sleeve image to be displayed in each window (101 to 106), is associated with a window zone comprising representations of selection criteria (108 to 114, 1071 to 1076), the respective addresses of which make it possible to extract from the data base (16) the information meeting these criteria when a criterion has been selected by the user touching the screen (33).

6. Method according to Claim 5, **characterised in that** the selection criterion is constituted by the various recent decades (1071 to 1076).

7. Method according to Claim 5, **characterised in that** the selection criterion is constituted by category (109).

8. Method according to Claim 5, **characterised in that** the selection criterion is constituted by an index (108).

9. Audio-visual reproduction system comprising:
- a microprocessor (1) associated with a payment device (35),
- a mass storage means (21) for, *inter alia,* storing in compressed digital form sound recordings to be exploited and associated visual recordings,
- interfaces (153) connected with digital display means (33, 61, 62) and digital sound-reproduction means (54),
- a video monitor (62) connected with a touch screen (33), itself controlled by an interface program (153) allowing it to react when a user contacts the touch screen (33), this interface program making it possible to translate these contacts for the operating system as mouse events triggering, via a library of integrated services and tools, the modification of the progress of one of the modules of the interface program (153),
the audio-visual reproduction system being **characterised in that** the video monitor (62) comprises an operation module allowing at least two window zones (92, 93) to be displayed in the touch screen (33), at least one (93) of the window zones comprising a plurality of windows (931, 932, 933, 934) representing images of album sleeves, each window (931, 932, 933, 934) comprising an album sleeve image being associated with at least one access address for information in the data base (16) stored in the mass memory (21), said interface program (153) being arranged so as to trigger, by a touch selection by the user on the local zone of the screen (33) corresponding to one of the windows (931, 932, 933, 934) displaying the image of an album sleeve, an actual selection of the information relating to the album illustrated by its sleeve, and to display via the operation module of the video monitor (62), in a zone (92) distinct from the zone (93) used for displaying the album sleeve images, a list of the sound recordings on the album selected that are available in the data base (16).

10. Audio-visual reproduction system, according to Claim 9, **characterised in that** at least one of the window zones comprises a plurality of windows representing images of sleeves and **in that** the other zone of the window comprises the display of a plurality of criteria for searching the data base of visual or sound recordings corresponding to the information displayed on the screen.

11. Audio-visual reproduction system according to Claim 10, **characterised in that** the search criterion is the selection of a number of albums corresponding to the number of windows that can be displayed on the screen and associated graphic information.

12. Audio-visual reproduction system according to Claim 11, **characterised in that** the data base (16) is scanned by incrementing the size of the number of windows that can be displayed on the selection screen.

13. Audio-visual reproduction system according to Claim 12, **characterised in that** the selection criterion corresponds to category (109).

14. Audio-visual reproduction system according to Claim 13, **characterised in that** the selection criterion is a given period of time (1071 to 1976).

15. Audio-visual reproduction system, according to Claim 9, the audio-visual reproduction system being **characterised in that** the operation module of the video monitor (62) makes it possible to display at least two window zones in the touch screen (33), at least one of the window zones comprising a plurality of windows representing sleeve images associated with titles stored in the mass memory (21), the touching of one of these windows causing the display of the sleeve selected, the list of associated titles and other sleeves by the same performer as that of the sleeve selected, and the other window zone comprising at least one window, touching which makes it possible to scroll through the images of the sleeves.

## Patentansprüche

1. Verfahren zum Auswählen einer Aufzeichnung in einem audiovisuellen Wiedergabesystem, das umfasst: einen Mikroprozessor, einen Massenspeicher (21), der eine Datenbank (16) digitalisierter Tonaufzeichnungen unterschiedlicher Künstler sowie graphische Informationen, die Albumhüllen entsprechen, die jeder der digitalisierten Tonaufzeichnungen zugeordnet sind, speichert, eine Audiovorrichtung, ein Anzeigemittel, ein Kommunikationssystem und ein Multitasking-Betriebssystem, das eine gleichzeitige Verarbeitung von Operationen des Mikroprozessors, der Audiovorrichtung und des Kommunikationssystems ermöglicht, wobei das Verfahren **dadurch gekennzeichnet ist, dass** es darin besteht:
- über das Anzeigemittel, das ein Berührungsschirm (33) ist, wenigstens zwei Fensterzonen (92, 93) anzuzeigen, wovon wenigstens eine mehrere Fenster (931, 932, 933, 934) enthält,
- zu jedem der Fenster (931, 932, 933, 934) der wenigstens einen Fensterzone (93) durch Auswahl von Daten, die für die Anzeige notwendig sind, graphische Informationen zu schicken, die in digitaler Form in dem Massenspeicher (21) gespeichert sind und ein Bild einer jedem Fenster (931, 932, 933, 934) zugeordneten Albumhülle repräsentieren, wobei die Tonaufzeichnungen, die jedem Bild einer Hülle entsprechen, in digitaler Form im Massenspeicher (21) des Systems gespeichert sind,
- eine Schnittstellen-Software (153) des Berührungsschirms (33) zu verwenden, um den Informationen der in dem Massenspeicher (21) gespeicherten Datenbank (16) für jedes Fenster (931, 932, 933, 934), das ein Bild einer Albumhülle anzeigt, wenigstens eine Zugriffsadresse zuzuordnen, wenn eines von ihnen von einem Anwender berührt wird,
- durch eine taktile Auswahl des Anwenders auf der lokalen Zone des Schirms (33), die einem der Fenster (931, 932, 933, 934) entspricht, das das Bild einer Albumhülle anzeigt, eine effektive Auswahl von auf das durch ihre Hülle dargestellte Album bezogenen Informationen auszulösen und in einer Zone, die von der der Anzeige der Bilder der Albumhülle dienenden Zone (93) verschieden ist, eine Liste von Tonaufzeichnungen des ausgewählten Albums anzuzeigen, die in der Datenbank (16) verfügbar sind.

2. Verfahren nach Anspruch 1, **dadurch gekennzeichnet, dass** die Berührung eines der Fenster die Anzeige sowohl der entsprechenden Hülle (92) als auch der verschiedenen auswählbaren Titel, die dieser Darstellung der Hülle zugeordnet sind, hervorruft, wobei die Auswahl eines Titels durch Berühren eines der Titel der Liste (94) erfolgt und wobei die Ausführung durch Berührung einer Taste (95), die die Ausführung eines ausgewählten Titels befiehlt, erfolgt.

3. Verfahren nach Anspruch 1 oder 2, **dadurch gekennzeichnet, dass** eine Zone des Schirms in Form eines Bandes (93) mehrere graphische Anzeigetasten (931 bis 934) aufweist, in denen die Bilder der Hüllen desselben Sängers angezeigt werden, die in dem audiovisuellen Wiedergabesystem verfügbar sind.

4. Verfahren nach Anspruch 3, **dadurch gekennzeichnet, dass** in dem Band oder in der Zone des Schirms die Anzeige eines Pfeils (930, 935) erfolgt, um durch einen Schritt des Berührens eines der Pfeile zu bewirken, dass sich die anderen Bilder von Hüllen, die vor einer Berührung eines Pfeils nicht in einem der Fenster oder der Anzeigetasten angezeigt werden, in der einen oder der anderen Richtung vorbeibewegen.

5. Verfahren nach einem der Ansprüche 1 bis 4, **dadurch gekennzeichnet, dass** der Fensterzone, die die Anzeige jedes Fensters (101 bis 106) eines Hüllenbildes ermöglicht, eine Fensterzone zugeordnet ist, die Darstellungen von Auswahlkriterien (108 bis 114, 1071 bis 1076) enthält, deren jeweilige Adressen ermöglichen, aus der Datenbank (16) Informationen zu extrahieren, die auf diese Kriterien eine Antwort darstellen, wenn durch Berühren des Schirms (33) durch den Anwender ein Kriterium ausgewählt worden ist.

6. Verfahren nach Anspruch 5, **dadurch gekennzeichnet, dass** das Auswahlkriterium durch die verschiedenen letzten Jahrzehnte (1071 bis 1076) gebildet ist.

7. Verfahren nach Anspruch 5, **dadurch gekennzeichnet, dass** das Auswahlkriterium durch die Kategorie (109) gebildet ist.

8. Verfahren nach Anspruch 5, **dadurch gekennzeichnet, dass** das Auswahlkriterium durch einen Index (108) gebildet ist.

9. System für die audiovisuelle Wiedergabe, das umfasst:
- einen Mikroprozessor (1), der einer Bezahlvorrichtung (35) zugeordnet ist,
- ein Massenspeichermittel (21), um unter anderem in komprimierter, digitaler Form Tonaufzeichnungen, die benutzt werden sollen, und zugeordnete visuelle Aufzeichnungen zu speichern,
- Schnittstellen (153), die mit digitalen Anzeigemitteln (33, 61, 62) und mit digitalen Tonwiedergabemitteln (54) verbunden sind,
- einen Videomonitor (62), der mit einem Berührungsschirm (33) verbunden ist, der seinerseits durch ein Schnittstellenprogramm (153) gesteuert wird, damit er auf die Berührung des Berührungsschirms (33) durch einen Anwender reagieren kann, wobei dieses Schnittstellenprogramm ermöglicht, diese Berührungen für das Betriebssystem in Maus-Ereignisse zu überführen, die über eine Bibliothek von Werkzeugen und integrierten Diensten die Modifikation des Ablaufs eines der Schnittstellenprogramm-Module (153) auslösen,
wobei das audiovisuelle Wiedergabesystem **dadurch gekennzeichnet ist, dass** der Videomonitor (62) ein Funktionsmodul umfasst, das ermöglicht, wenigstens zwei Fensterzonen (92, 93) auf dem Berührungsschirm (33) anzuzeigen, wobei wenigstens eine (93) der Fensterzonen mehrere Fenster (931, 932, 933, 934) aufweist, die Bilder von Albumhüllen darstellen, wobei jedes Fenster (931, 932, 933, 934) ein Bild der Albumhülle enthält, das wenigstens einer Adresse für den Zugriff auf die Informationen der Datenbank (16), die im Massenspeicher (21) gespeichert ist, zugeordnet ist, wobei das Schnittstellenprogramm (153) so beschaffen ist, dass es durch eine taktile Auswahl des Anwenders in der lokalen Zone des Schirms (33), die einem der Fenster (931, 932, 933, 934) entspricht, das das Bild einer Albumhülle anzeigt, eine effektive Auswahl von Informationen auslöst, die auf das durch ihre Hülle dargestellte Album bezogen sind, und über das Funktionsmodul des Videomonitors (62) in einer Zone (92), die von jener Zone (93) verschieden ist, die dazu dient, die Bilder von Albumhüllen anzuzeigen, eine Liste von Tonaufzeichnungen des ausgewählten Albums anzuzeigen, die in der Datenbank (16) verfügbar sind.

10. Audiovisuelles Wiedergabesystem nach Anspruch 9, **dadurch gekennzeichnet, dass** wenigstens eine der Fensterzonen mehrere Fenster aufweist, die Bilder von Hüllen darstellen, und dass die andere Fensterzone die Anzeige mehrerer Kriterien für die Suche in der Datenbank der visuellen Aufzeichnungen oder der Tonaufzeichnungen, die eine Antwort auf die auf den Schirm angezeigten Informationen darstellen, enthält.

11. Audiovisuelles Wiedergabesystem nach Anspruch 10, **dadurch gekennzeichnet, dass** das Suchkriterium die Auswahl einer Anzahl von Alben ist, die der Anzahl der auf dem Schirm anzeigbaren Fenster und den zugeordneten graphischen Informationen entspricht.

12. Audiovisuelles Wiedergabesystem nach Anspruch 11, **dadurch gekennzeichnet, dass** die Durchsuchung der Datenbank (16) durch Inkrementieren der Größe der Anzahl von auf dem Auswahlschirm anzeigbaren Fenstern ausgeführt wird.

13. Audiovisuelles Wiedergabesystem nach Anspruch 12, **dadurch gekennzeichnet, dass** das Auswahlkriterium der Kategorie (109) entspricht.

14. Audiovisuelles Wiedergabesystem nach Anspruch 13, **dadurch gekennzeichnet, dass** das Auswahlkriterium eine bestimmte Zeitdauer (1071 bis 1076) ist.

15. Audiovisuelles Wiedergabesystem nach Anspruch 9, wobei das audiovisuelle Wiedergabesystem **dadurch gekennzeichnet ist, dass** das Funktionsmodul des Videomonitors (62) ermöglicht, wenigstens zwei Fensterzonen in dem Berührungsschirm (33) anzuzeigen, wobei wenigstens eine der Fensterzonen mehrere Fenster aufweist, die Bilder von Hüllen darstellen, die Titeln zugeordnet sind, die in dem Massenspeicher (21 gespeichert sind, wobei die Berührung eines dieser Fenster die Anzeige der ausgewählten Hülle, der Liste der zugeordneten Titel und anderer Hüllen desselben Interpreten wie jenes der ausgewählten Hülle bewirkt, während die andere Fensterzone wenigstens ein Fenster aufweist, deren Berührung ermöglicht, die Bilder der Hüllen vorbeizubewegen.
